# FASCICULE DE BREVET EUROPEEN

(11) **EP 0 649 149 B1**
(45) Date de publication et mention de la délivrance du brevet: **05.03.1997**
(21) Numéro de dépôt: 94402295.3
(22) Date de dépôt: 12.10.1994
(51) Int. Cl.: G21F 7/06, G01N 35/10, B67B 7/18

(54) **Ensemble de prélèvement d'échantillons liquides dans des cruchons obturés par des bouchons vissés**
Anordnung zur Entnahme von Flüssigkeitsproben aus mit Schraubverschlüssen geschlossenen Behältern
System for taking liquid samples from bottles closed with screw caps

(30) Priorité: 14.10.1993 FR 9312216
(43) Date de publication de la demande: 19.04.1995
(73) Titulaire: COMPAGNIE GENERALE DES MATIERES NUCLEAIRES (COGEMA), F-78141 Vélizy-Villacoublay (FR)
(72) Inventeur: Besnier, Joseph, F-50440 Acqueville (FR)
(74) Mandataire: Dubois-Chabert, Guy

(56) Documents cités:
- EP-A- 0 557 828
- FR-A- 1 250 479
- FR-A- 1 602 189
- US-A- 2 571 302
- PATENT ABSTRACTS OF JAPAN, vol. 15, no. 513 (M-1196) 26 Décembre 1991 & JP-A-03 226 485

## Description

L'invention concerne un ensemble conçu pour prélever à distance et de manière automatisée des échantillons liquides contenus dans des cruchons obturés par des bouchons vissés.

L'ensemble de prélèvement d'échantillons liquides conforme à l'invention peut notamment être utilisé à l'intérieur d'une cellule étanche destinée à l'analyse de produits chimiques tels que des produits radioactifs acheminés jusqu'à cette cellule dans des cruchons étanches. Plus précisément, la cellule étanche contenant l'ensemble de prélèvement selon l'invention peut faire partie d'une installation automatisée telle que celle qui est décrite dans le document FR-A-2 675 582. Dans cette installation, des produits liquides sont prélevés de façon automatisée en différents points d'une chaîne de fabrication ou de traitement et introduits dans des cruchons étanches. Ces derniers sont ensuite transférés automatiquement dans des boîtes d'analyse par des circuits de transfert pneumatique.

Dans une telle installation, les cruchons contenant les échantillons à analyser chutent directement dans le fond des boîtes d'analyse. Avant de procéder à la préparation analytique des échantillons contenus dans les cruchons, les opérateurs doivent donc effectuer manuellement, à l'aide de pinces de manutention, trois opérations manuelles successives qui sont la préhension d'un cruchon, son ouverture, puis le prélèvement d'un échantillon dans le cruchon considéré. Cela entraîne un certain nombre de problèmes qui vont à présent être exposés.

La préhension manuelle d'un cruchon par l'opérateur à l'aide de pinces de manutention conduit l'opérateur à aller chercher le cruchon dans le fond de la boîte d'analyse en l'identifiant par lecture d'un code porté sur chacun des cruchons. Etant donné que tous les cruchons se trouvent en vrac dans le fond de la boîte d'analyse, cette opération est fastidieuse et délicate. Elle est encore compliquée par les déformations optiques produites par le hublot au travers duquel l'opérateur lit les codes portés sur les cruchons. Il s'ensuit un risque d'erreur et même de perte de certains cruchons, ce qui peut conduire l'opérateur à demander un nouveau prélèvement et accroît par conséquent les déchets.

Afin d'ouvrir le cruchon préalablement saisi, l'opérateur doit avoir recours à deux pinces de manutention. En plus du caractère particulièrement délicat de cette opération, elle présente un sérieux risque de contamination du contenu du cruchon par les pinces et réciproquement. En outre et de façon encore plus grave, cette opération d'ouverture du cruchon présente un sérieux risque de renversement de son contenu dans le fond de la boîte d'analyse. Cela nécessite de redemander un autre cruchon et entraîne une perte de temps difficilement acceptable. De plus, le contenu du cruchon est alors évacué directement dans les effluents liquides, ce qui est contraire à la limitation souhaitable de ces effluents.

Il est également à noter que l'utilisation de pinces de manutention rend en pratique impossible la fermeture des cruchons, de telle sorte que les surplus d'échantillons non utilisés pour l'analyse et restant dans le fond des cruchons constituent des déchets et ne peuvent en aucun cas être recyclés.

Enfin la troisième opération effectuée manuellement par l'opérateur consiste à prélever un échantillon liquide dans le cruchon à l'aide d'une pipette classique reliée par un tuyau à une burette placé à l'extérieur de la boite d'analyse. Un premier inconvénient lié à cette opération découle du fait que l'opérateur doit impérativement lire un trait de jauge porté sur la pipette, ce qui impose la présence de cet opérateur et constitue une opération longue et délicate. Un deuxième inconvénient concerne le risque, à la suite d'une mauvaise manipulation, de faire sortir le liquide radioactif à analyser à l'extérieur de la boîte d'analyse et à proximité immédiate de la tête de l'opérateur.

Le document FR-A-1 250 479 décrit un appareil d'échantillonnage de liquide à partir de bouteille d'échantillonnage fermée par un bouchon en élastomère en évitant l'ouverture du bouchon, l'appareil comportant un dispositif de préhension et un dispositif de prélèvement.

L'invention a précisément pour objet un ensemble de prélèvement d'échantillons liquides permettant d'effectuer à distance et de manière automatisée les opérations de préhension et d'ouverture des cruchons ainsi que l'opération de prélèvement d'un échantillon dans ce cruchon, ce qui supprime les risques d'erreurs, les difficultés de manutention et les pertes de temps de la technique manuelle existante, et limite les effluents au strict minimum.

Conformément à l'invention, cet objectif est atteint au moyen d'un ensemble de prélèvement d'échantillons liquides dans des cruchons obturés par des bouchons vissés, caractérisé par le fait qu'il comprend :
- un module de préhension des cruchons, comportant une pince de préhension apte à tenir un cruchon selon un axe sensiblement vertical, des moyens de commande d'ouverture et de fermeture de la pince et des moyens de commande d'un déplacement horizontal de la pince entre un poste de préhension et un poste d'ouverture des cruchons ;
- un module d'ouverture et de fermeture des cruchons, placé au droit du poste d'ouverture des cruchons, comportant une pince de serrage d'axe vertical, des moyens de commande de serrage et de desserrage de la pince de serrage, des moyens de commande de rotation de la pince de serrage autour de son axe vertical, et des moyens de commande d'un déplacement vertical de la pince de serrage ; et
- un module de prélèvement de liquide comprenant un embout d'aspiration, d'axe sensiblement vertical, des moyens de commande d'un déplacement horizontal de cet embout entre une position de prélèvement, dans laquelle les axes verticaux de la pince de serrage et de l'embout d'aspiration sont confondus, et une position de distribution du liquide prélevé dans un réceptacle, et des moyens de commande d'un déplacement vertical de l'embout d'aspiration.

Dans un tel ensemble, le cruchon dans lequel on désire effectuer un prélèvement est saisi par la pince du module de préhension et maintenu par cette pince, pendant que son bouchon est dévissé par le module d'ouverture et de fermeture, puis pendant qu'un prélèvement y est réalisé par le module de prélèvement. Le cruchon peut ensuite être refermé par le module d'ouverture et de fermeture, avant d'être amené par le module de préhension jusqu'à une rampe permettant de le transférer hors de la boîte d'analyse, par exemple dans une unité permettant de recycler la partie non utilisée des échantillons liquides encore présents dans les cruchons. Tous les inconvénients liés à l'utilisation de pinces de manutention pour assurer la préhension et l'ouverture des cruchons puis le prélèvement des échantillons sont supprimés par l'utilisation d'un tel ensemble. En particulier, les effluents liquides et solides sont minimisés et les risques d'erreurs dans les mesures ainsi que dans les manutentions sont éliminés.

Il est à noter que l'utilisation de trois modules séparés, gérés par un même automate, permet d'implanter l'ensemble sur des boîtes d'analyse existantes, ce qui ne pourrait être fait avec un robot regroupant les trois fonctions.

Dans une forme de réalisation préférentielle de l'invention, la pince de préhension est montée à l'extrémité basse d'un arbre rotatif, d'axe vertical décalé par rapport à l'axe du cruchon tenu par cette pince de préhension et les moyens de commande d'un déplacement horizontal de la pince de préhension comprennent des moyens pour commander une rotation de l'arbre rotatif.

Chaque cruchon peut être introduit dans la pince de préhension par une goulotte supérieure d'arrivée des cruchons, alors que la pince est en position ouverte. La chute du cruchon dans la goulotte est alors interrompue par un fond escamotable associé au module de préhension et prévu pour être placé sous la pince de préhension, au-dessus d'une goulotte inférieure d'évacuation des cruchons.

Le module de préhension peut également comprendre des moyens de verrouillage en position de la pince de préhension en face du poste de préhension et du poste d'ouverture des cruchons.

Dans la forme de réalisation préférentielle de l'invention, le module d'ouverture et de fermeture comprend une broche, d'axe vertical, reliant la pince de serrage aux moyens de commande de rotation, et une tige disposée coaxialement à l'intérieur de la broche et reliant la pince de serrage aux moyens de commande de serrage et de desserrage.

Avantageusement, le module d'ouverture et de fermeture comprend aussi un plateau ramasse-goutte escamotable, apte à être placé en dessous de la pince de serrage pour recueillir une goutte d'échantillon tombant éventuellement du bouchon lorsque celui-ci vient d'être dévissé du cruchon.

Dans ce dernier cas, les moyens de commande d'un déplacement vertical de la pince de serrage agissent simultanément sur le plateau ramasse-goutte, de telle sorte que celui-ci soit placé en dessous de la pince de serrage lorsque cette dernière n'occupe pas une position basse de vissage et de dévissage.

Dans la forme de réalisation préférentielle de l'invention, l'embout d'aspiration est monté sur un bras horizontal rotatif, dont une rotation est commandée par les moyens de commande d'un déplacement horizontal de l'embout.

De préférence, afin d'éviter que la contamination ne parvienne à l'extérieur de la boîte d'analyse, l'embout d'aspiration est relié à une garde hydraulique de sécurité située à l'intérieur de cette boîte.

On décrira à présent, à titre d'exemple non limitatif, une forme de réalisation préférentielle de l'invention, en se référant aux dessins annexés, dans lesquels :
- la figure 1 est une vue de côté représentant schématiquement un ensemble de prélèvement d'échantillons liquides conforme à l'invention ;
- la figure 2 est une vue en coupe verticale représentant à plus grande échelle le module de préhension des cruchons utilisé dans l'ensemble de la figure 1 ;
- la figure 3 est une vue en coupe selon la ligne III-III de la figure 2, illustrant à plus grande échelle la partie inférieure du module de préhension ;
- la figure 4 est une vue en coupe selon la ligne IV-IV de la figure 3 ;
- la figure 5 est une vue de côté, en coupe longitudinale partielle, dont les parties droite et gauche représentent respectivement la partie supérieure et la partie inférieure du module d'ouverture et de fermeture des cruchons ;
- la figure 6 est une vue de côté et en coupe longitudinale illustrant à plus grande échelle l'extrémité inférieure du module d'ouverture et de fermeture des cruchons ; et
- la figure 7 est une vue de côté, en coupe longitudinale partielle, représentant à plus grande échelle le module de prélèvement utilisé dans l'ensemble de la figure 1.

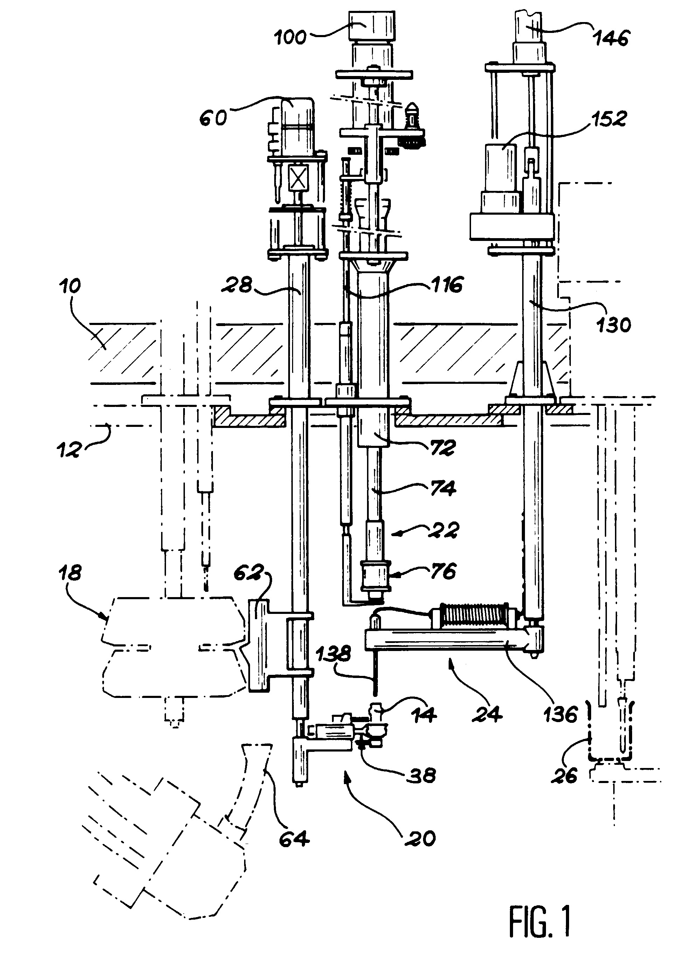

L'ensemble de prélèvement d'échantillons illustré schématiquement sur la figure 1 est prévu pour être associé à une boîte d'analyse dans laquelle une ou plusieurs analyses chimiques doivent être effectuées sur des produits liquides radioactifs prélevés auparavant en différents points d'une chaîne de fabrication ou de retraitement. Afin d'être transférés dans la boîte d'analyse, les produits liquides radioactifs prélevés sur la chaîne de fabrication ou de retraitement sont introduits dans des cruchons qui sont acheminés jusqu'à la boîte d'analyse par un circuit de transfert pneumatique, par exemple de la manière décrite dans le document FR-A-2 675 582. Le prélèvement et le transfert des produits liquides à analyser ne font pas partie de l'invention et aucune description n'en sera faite ici.

L'ensemble de prélèvement d'échantillons conforme à l'invention a pour fonctions de saisir à tour de rôle chacun des cruchons dans lesquels un ou plusieurs échantillons liquides doivent être prélevés à des fins d'analyses, d'ouvrir ce cruchon en en dévissant le bouchon vissé, d'effectuer dans le cruchon ouvert le ou les prélèvements prévus, de reboucher le cruchon afin de permettre sa réexpédition à l'extérieur de la boîte d'analyse. L'ensemble de prélèvement réalise ces différentes opérations à l'aide de motorisations qui permettent une automatisation complète.

Lors de leur entrée dans la boîte d'analyse, les cruchons sont avantageusement stockés dans un dispositif approprié qui ne fait pas partie de l'invention. Pour cette raison, ce dispositif ne sera pas décrit. Si la cadence et l'ordre d'acheminement des cruchons dans la boîte d'analyse le permettent, les cruchons peuvent aussi être pris en charge directement par l'ensemble de prélèvement conforme à l'invention, dès qu'ils pénètrent dans la boîte d'analyse.

Sur la figure 1, la référence 10 désigne une partie de la paroi supérieure horizontale de la boîte d'analyse. Cette paroi est doublée intérieurement par une peau métallique 12. Les cruchons 14 qui contiennent les produits radioactifs à analyser sont introduits dans la boîte d'analyse par un tube vertical (non représenté) qui traverse la paroi 10 et la peau 12. Dans la forme de réalisation illustrée schématiquement sur la figure 1, les cruchons 14 sont alors placés dans un dispositif de stockage tampon dont seul le contour est illustré en 18.

Conformément à l'invention, l'ensemble de prélèvement d'échantillons liquides se compose de trois modules distincts, supportés par la peau métallique 12 qui double intérieurement la paroi supérieure horizontale 10 de la boite d'analyse. Ces trois modules comprennent un module 20 de préhension des cruchons, un module 22 d'ouverture et de fermeture des cruchons et un module 24 de prélèvement de liquide dans les cruchons. Chacun de ces modules est conçu de telle sorte que les actionneurs et les capteurs soient placés en majorité à l'extérieur de la boîte d'analyse. Cette caractéristique facilite la maintenance et limite l'encombrement de l'ensemble à l'intérieur de la boîte d'analyse et diminue la mise en déchets des actionneurs et capteurs.

Le module 20 de préhension des cruchons a pour première fonction de saisir, à sa sortie du dispositif de stockage tampon 18 ou directement lors de son arrivée dans la boîte d'analyse si ce dispositif de stockage n'existe pas, chaque cruchon 14 dans lequel un ou plusieurs échantillons liquides doivent être prélevés à des fins d'analyse. Le module 20 de préhension des cruchons a aussi pour fonction de transférer le cruchon qu'il vient de saisir au droit d'un poste d'ouverture des cruchons matérialisé par le module 22 d'ouverture et de fermeture. Il assure ensuite le maintien du cruchon lors de la mise en oeuvre de ce module 22 d'ouverture et de fermeture, puis lorsqu'un prélèvement est effectué dans le cruchon à l'aide du module 24 de prélèvement de liquide. Enfin, lorsque les prélèvements ont été effectués, le module 20 de préhension des cruchons continue à tenir le cruchon pour permettre sa fermeture par le module 22, puis assure le transfert du cruchon refermé jusqu'à un poste d'expédition du cruchon vers l'extérieur de la boîte d'analyse.

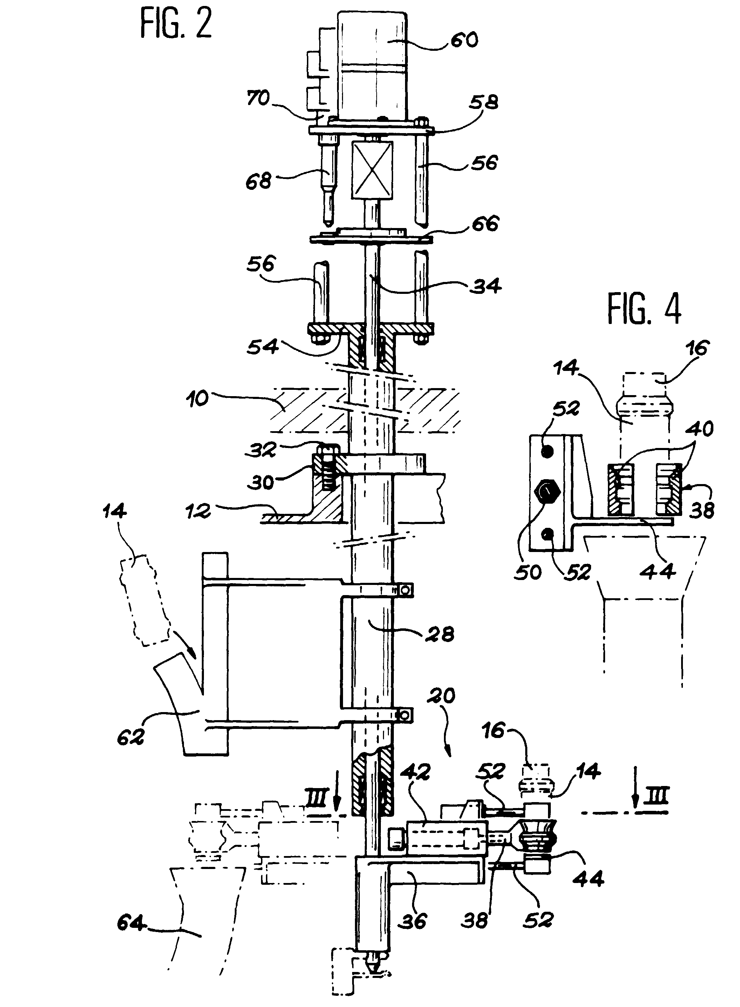

Les fonctions du module 22 d'ouverture et de fermeture des cruchons sont le dévissage d'un bouchon vissé 16 (figure 2) qui obture le cruchon 14 saisi par le module 20 de préhension, puis le revissage de ce même bouchon lorsque le ou les prélèvements ont été effectués par le module 24 de prélèvement de liquide.

Enfin, le module 24 de prélèvement de liquide a pour fonctions d'aspirer un ou plusieurs échantillons de liquide hors du cruchon tenu par le module de préhension 20 et de le transférer dans un ou plusieurs récipients 26 placés à l'intérieur de la boîte d'analyse, afin d'y subir des analyses chimiques.

Une forme de réalisation préférentielle du module de préhension 20 des cruchons va à présent être décrite en détail en se référant aux figures 2 à 4.

Le module de préhension 20 des cruchons comprend un fourreau support 28, d'axe vertical, qui traverse la paroi supérieure horizontale 10 de la boîte d'analyse ainsi que sa peau métallique 12. Dans sa partie centrale, le fourreau support 28 comporte une bride 30 par laquelle il est fixé, par exemple au moyen de vis 32, sur la peau métallique 12.

Un arbre rotatif 34, d'axe vertical, est monté dans le fourreau support 28 de façon à pouvoir y tourner librement tout en y étant immobilisé en translation. Des joints d'étanchéité (non représentés) sont interposés entre l'arbre rotatif 34 et le fourreau support 28 pour préserver le confinement.

A son extrémité inférieure située à l'intérieur de la boîte d'analyse, l'arbre rotatif 34 fait saillie hors du fourreau support 28 et porte un support de pince 36, de préférence interchangeable. Ce support de pince 36 se présente sous la forme d'un bras horizontal à l'extrémité duquel fait saillie une pince de préhension 38, apte à saisir un cruchon 14 selon un axe vertical décalé par rapport à l'axe vertical de l'arbre rotatif 34. Plus précisément, la pince de préhension 38 comprend deux mors 40 en arc de cercle, présentant un axe de symétrie vertical confondu avec l'axe d'un cruchon 14 saisi entre ces mors.

Dans la forme de réalisation illustrée sur les figures 2 à 4, les deux mors 40 de la pince de préhension 38 sont mobiles et articulés de façon symétrique par rapport à un plan passant à la fois par leur axe de symétrie vertical et par l'axe vertical de l'arbre rotatif 34. Le mouvement des mors 40 est commandé par un vérin 42 monté sur le support de pince 36.

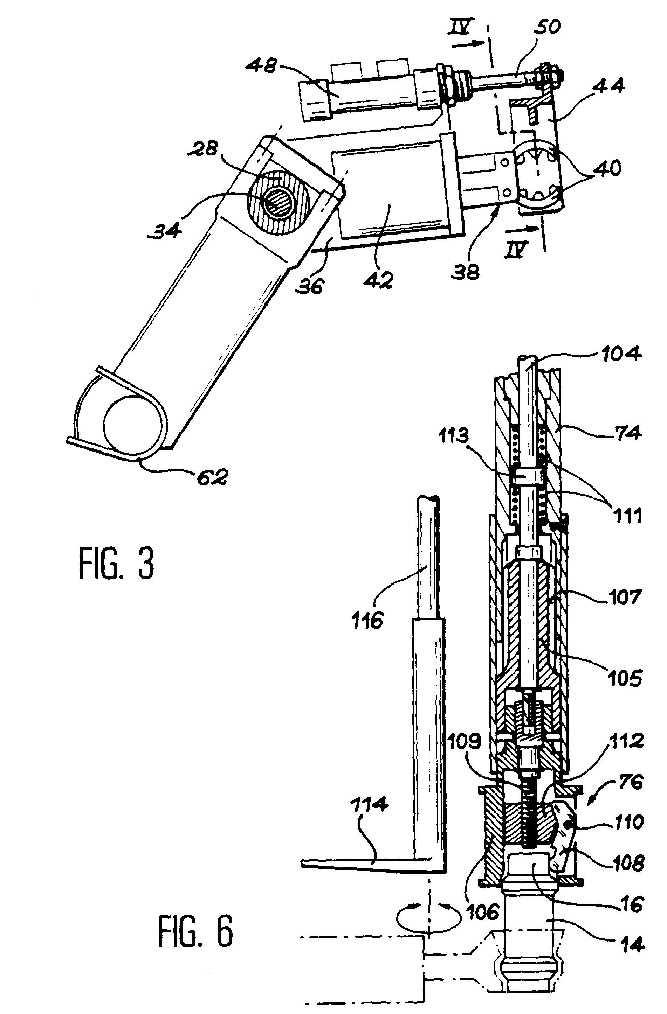

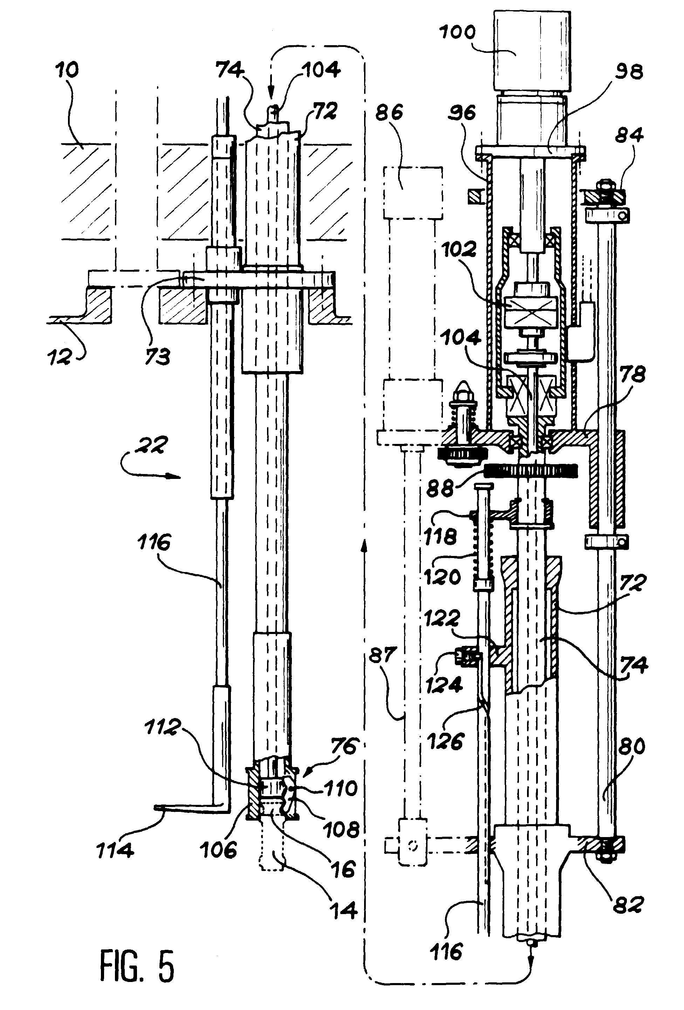

Comme l'illustrent plus précisément les figures 3 et 4, le support de pince 36 porte également un fond escamotable 44 normalement placé sous la pince de préhension 38 et sous le cruchon 14 éventuellement tenu dans cette pince.

De façon plus précise, le support de pince 36 porte latéralement un vérin 48 (figure 3) dont la tige 50 supporte le fond escamotable 44 à son extrémité. L'actionnement du vérin 48 permet ainsi de commander un mouvement de translation du fond escamotable 44 parallèlement à l'axe horizontal du vérin 42, entre la position active illustrée en trait plein sur les figures 2 à 4 et une position escamotée, dans laquelle le fond 44 est décalé vers le support de pince 36 par rapport à la pince de préhension 38. Deux tiges 52 (figures 2 et 4) sont fixées sur le fond 44, respectivement au-dessus et en dessous de la tige 50 du vérin 48, et coulissent dans des manchons de guidage solidaires du support de pince 36, de façon à empêcher toute rotation du fond escamotable 44 autour de la tige 50 et à maintenir ce fond horizontal.

L'extrémité haute du fourreau support 28, située à l'extérieur de la boîte d'analyse, porte une plaque inférieure horizontale 54. Cette plaque est reliée par des colonnettes verticales 56 à une plaque supérieure horizontale 58 portant un motoréducteur 60. Ce motoréducteur 60 entraîne en rotation l'arbre rotatif 34, de façon à déplacer angulairement la pince 38 autour de l'axe vertical de l'arbre 34 entre un poste de préhension et d'évacuation des cruchons et un poste d'ouverture des cruchons. Il est à noter que les postes de préhension et d'évacuation des cruchons, qui sont confondus dans la forme de réalisation illustrée sur les figures, peuvent aussi être situés en des emplacements distincts.

Le poste de préhension des cruchons est matérialisé par une goulotte supérieure 62 d'arrivée des cruchons, d'axe vertical, en dessous de laquelle vient se placer la pince de préhension 38 équipé de son fond amovible 44. Dans la forme de réalisation illustrée sur les figures 2 et 3, la goulotte supérieure 62 est fixée directement sur le fourreau support 28, ce qui garantit un alignement satisfaisant de la pince en dessous de la goulotte 62 dans la position de préhension.

Dans l'exemple de réalisation illustré sur les figures, le cruchon 14 à traiter chute dans la goulotte supérieure 62 à partir du dispositif de stockage tampon 18. En variante, la goulotte supérieure 62 peut aussi recevoir directement un cruchon en provenance de l'extérieur de la boîte d'analyse.

Le poste d'évacuation des cruchons est matérialisé par une goulotte inférieure 64 d'évacuation des cruchons, d'axe vertical, au-dessus de laquelle se trouve la pince 38 lorsqu'elle occupe sa position d'évacuation d'un cruchon. Dans la forme de réalisation illustrée, les axes verticaux de la goulotte inférieure 64 et de la goulotte supérieure 62 sont confondus.

Lorsque la pince de préhension 38 est placée en face du poste d'ouverture et de fermeture des cruchons, dans lequel s'effectuent également les prélèvements d'échantillons liquides, l'axe vertical de la pince est confondu avec l'axe vertical du module d'ouverture et de fermeture 22 dont la description détaillée sera faite par la suite.

Afin d'éviter toute erreur de manutention, le module de préhension 20 illustré sur la figure 2 est équipé d'un dispositif de verrouillage de la pince de préhension 38 au droit du poste de préhension et d'évacuation ainsi qu'au droit du poste d'ouverture et de fermeture des cruchons. L'actionnement de ce dispositif de verrouillage conditionne la mise en oeuvre des vérins 42 et 48.

Dans la forme de réalisation illustrée sur la figure 2, le dispositif de verrouillage comprend un disque 66, solidaire de l'arbre rotatif 34 entre les plateaux 54 et 58. Ce disque 66 comporte deux trous (non représentés) situés à égale distance de l'axe de l'arbre 34 et décalés angulairement autour de cet axe. Le dispositif de verrouillage comprend également un doigt de verrouillage vertical 68 apte à se déplacer selon son axe entre une position haute et une position basse sous l'action d'un vérin 70 monté sur le plateau supérieur 58. Dans sa position haute, illustrée sur la figure 2, le doigt de verrouillage 68 est situé en totalité au-dessus du disque 66, alors qu'il traverse l'un ou l'autre des trous formés dans ce disque lorsqu'il occupe sa position basse. Plus précisément, les trous formés dans le disque 66 sont positionnés de telle sorte que l'un d'entre eux se trouve à la verticale du doigt de verrouillage 68 lorsque la pince 38 est située au droit du poste de préhension et d'évacuation et que l'autre trou se trouve à la verticale du doigt de verrouillage 68 lorsque la pince de préhension 38 se trouve au droit du poste d'ouverture et de fermeture des cruchons.

Des capteurs de fin de course (non représentés) sont associés aux vérins 42, 48 et 70 ainsi qu'au motoréducteur 60 afin de commander leur arrêt automatique lorsque le déplacement désiré à été effectué.

Il est à noter que dans une variante de réalisation non représentée, les vérins 42 et 48 sont avantageusement remplacés par des moteurs situés à l'extérieur de la boîte d'analyse et commandant les mouvements correspondants de la pince 38 et du fond amovible 44 par l'intermédiaire de mécanismes appropriés, par exemple du type pignons-crémaillères. La transmission des mouvements au travers de la paroi 10 de la boîte d'analyse s'effectue alors par une ou plusieurs tiges verticales.

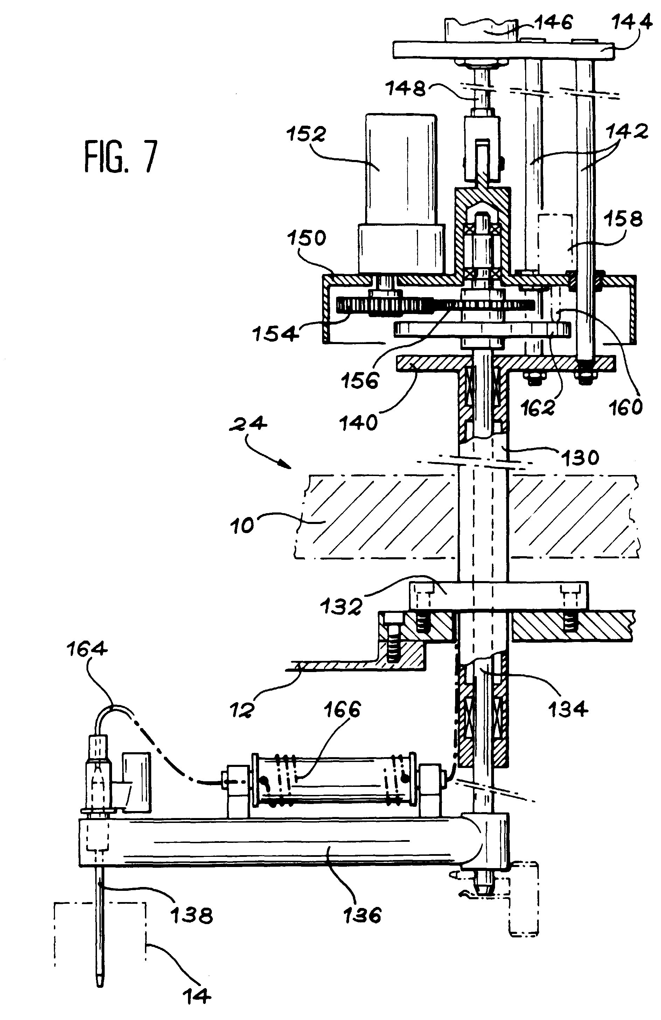

Une forme de réalisation préférentielle du module 22 d'ouverture et de fermeture des cruchons 14 va à présent être décrite en détail en se référant aux figures 5 et 6.

Ce module 22 d'ouverture et de fermeture des cruchons comprend tout d'abord un fourreau support 72, d'axe vertical, qui traverse la paroi supérieure horizontale 10 ainsi que la peau métallique 12 de la boîte d'analyse. Plus précisément, le fourreau 72 comporte une collerette 73 qui est fixée sur la peau métallique 12 par exemple au moyen de vis (non représentées).

Une broche creuse 74, d'axe vertical, est montée dans le fourreau 72 de façon à pouvoir tourner et coulisser librement à l'intérieur de ce dernier. Des joints d'étanchéité (non représentés) sont prévus entre la broche 74 et le fourreau 72 afin de préserver confinement de la boîte d'analyse. A son extrémité basse, la broche creuse 74 porte une pince de serrage 76 qui sera décrite plus en détail par la suite en se référant à la figure 6.

La broche creuse 74 fait saillie au-dessus de l'extrémité haute du fourreau support 72 et traverse une plaque inférieure horizontale 78, de façon à pouvoir tourner librement à l'intérieur de cette plaque tout en étant immobilisée en translation par rapport à celle-ci. La plaque inférieure horizontale 78 coulisse sur des colonnettes verticales 80 dont l'extrémité basse est fixée sur une bride 82 solidaire du fourreau support 72.

Les extrémités hautes des colonnettes 80 portent une plaque supérieure horizontale 84. Un vérin 86 est fixé sur la plaque inférieure horizontale 78 et sa tige de commande 87 fait saillie verticalement vers le bas pour être fixée, par son extrémité basse, à la bride 82. Cet agencement permet au vérin 86 de commander un déplacement vertical de la pince de serrage 76 entre une position haute et une position basse.

En dessous du plateau inférieur horizontal 78, la broche creuse 74 porte un pignon 88 servant à commander l'entraînement de la broche en rotation. La commande de ce mouvement est assurée soit par un moteur pas à pas, soit par un moteur normal associé à un codeur mécanique (non représenté).

Sur sa face supérieure, la plaque inférieure horizontale 78 porte un corps tubulaire 96 dont l'axe vertical est confondu avec l'axe du fourreau support 72 et de la broche creuse 74. A son extrémité haute, le corps tubulaire 96 porte une plaque supérieure horizontale 98 sur laquelle est montée un motoréducteur 100. L'arbre de sortie de ce motoréducteur 100 entraîne en rotation, par l'intermédiaire d'un dispositif limiteur de couple 102, une tige cylindrique 104 qui traverse coaxialement la broche creuse 74, de façon à commander l'actionnement de la pince de serrage 76 par son extrémité inférieure.

Comme l'illustre plus précisément la figure 6, la pince de serrage 76 comporte un embout tubulaire 106 monté de façon démontable à l'extrémité basse d'un porte-pince 105. Ce porte-pince 105 est lui-même lié en translation à l'extrémité basse de la tige 104 et lié en rotation à la broche creuse 74, par exemple au moyen de clavettes 107. Dans sa partie basse, l'embout tubulaire 106 porte trois becs de serrage 108 (dont l'un seulement est visible sur la figure 6) agencés de façon à pouvoir pivoter autour de trois axes horizontaux 110, orientés selon trois directions orthogonales par rapport à l'axe vertical commun de la broche 74 et de la tige 104. Les trois becs de serrage 108 sont répartis à 120° les uns des autres autour de cet axe vertical, de telle sorte que leurs extrémités inférieures forment la pince de serrage 76 dans laquelle peut être bloqué le bouchon vissé 16 d'un cruchon 14.

Une noix 112 est emprisonnée entre les becs de serrage 108, au niveau des axes 110, de façon à être en contact avec une empreinte en forme de V formée sur chacun des becs de serrage. Les surfaces en contact de la noix 112 et des becs de serrage 108 sont telles qu'un déplacement de la noix 112 vers le haut ou vers le bas a respectivement pour effet de faire pivoter les becs de serrage 108 dans le sens du serrage ou dans le sens du desserrage de la pince 76. Ces surfaces en contact ont aussi pour effet d'immobiliser la noix 112 en rotation à l'intérieur de l'embout tubulaire 106.

A son extrémité basse, la tige 104 entraîne en rotation une tige filetée 109 montée dans l'embout 106 et sur laquelle est vissée la noix 112. Par conséquent, une rotation de la tige 104 dans l'un ou l'autre sens, commandée par le motoréducteur 100, a pour effet de faire monter ou descendre la noix 112 dans l'embout tubulaire 106 et, par conséquent, de serrer ou de desserrer la pince 76.

Comme l'illustre également la figure 6, la tige 104 dispose d'un jeu vertical prédéterminé à l'intérieur de la broche creuse 74, par rapport à une position centrale déterminée par l'action de deux ressorts de compression 111 placés au-dessus ou en dessous d'un épaulement 113 formé sur la tige 104 et prenant appui sur des épaulements formés dans la broche 74.

Cette caractéristique autorise un léger déplacement de la pince de serrage 76, liée en translation à la tige 104, vers le haut ou vers le bas par rapport à la broche creuse 74. Lorsque cette dernière est entraînée en rotation pour assurer le vissage ou le dévissage du bouchon 16, le déplacement de la pince de serrage 76 vers le bas ou vers le haut qui résulte de cette action est ainsi rendu possible.

Comme l'illustrent également les figures 5 et 6, le module 22 d'ouverture et de fermeture des cruchons 14 comprend également un plateau ramasse-goutte horizontal escamotable 114, conçu pour venir se placer automatiquement en dessous de la pince 76 lorsque cette dernière s'éloigne de sa position basse illustrée sur les figures, dans laquelle s'effectuent le vissage et le dévissage.

De façon plus précise, le plateau ramasse-goutte 114 est monté à l'extrémité basse d'une tige verticale rotative 116 qui traverse la bride 73 de façon à pouvoir tourner et coulisser dans cette dernière. Cette traversée est étanche pour préserver le confinement de la boîte d'analyse. A son extrémité haute, située en dehors de la boîte d'analyse, la tige 116 traverse un bras 118 lié en translation à la broche creuse 74 mais dans lequel cette dernière peut tourner librement. Plus précisément, le bras 118 est placé entre deux épaulements formés sur la tige 116, de telle sorte que cette dernière dispose d'un certain débattement vertical par rapport au bras 118. Un ressort de compression 120 est interposé entre le bras 118 et l'épaulement inférieur de la tige 116, de façon à maintenir normalement cette dernière dans une position relativement basse par rapport au bras 118.

En dessous du bras 118, la tige 116 traverse également un bras 122 solidaire du fourreau support 72. Une vis à téton 124, dont l'extrémité pénètre dans une rainure 126 formée sur la tige 116, est fixée sur le bras 122. La rainure 126 comporte une partie haute de faible longueur orientée verticalement, une partie basse de plus grande longueur orientée également verticalement et une partie intermédiaire oblique reliant les parties haute et basse. Cet agencement a pour effet de provoquer une rotation automatique de la tige 116 d'un angle déterminé autour de son axe vertical lorsqu'il se produit un déplacement vertical relatif entre cette tige et le fourreau support 72. Le plateau ramasse-goutte escamotable 114 est ainsi automatiquement décalé par rapport à la pince de serrage 76 lorsque celle-ci occupe sa position basse illustrée sur la figure 5, et il vient se placer automatiquement en dessous de la pince 76 dès que celle-ci remonte et s'écarte de cette position basse de vissage et de dévissage du bouchon 16.

Plus précisément, lorsque la pince de serrage 76 approche de sa position basse illustrée sur la figure 5, la vis à téton 124 vient en appui contre le haut de la rainure 126. La fin de la descente de la pince 76 a donc pour effet d'écarter légèrement le bras 118 de l'épaulement supérieur formé sur la tige 116, en comprimant le ressort 120. Cette caractéristique permet de libérer totalement l'espace situé en dessous de la pince de serrage 76, pour éviter toute interférence avec le module de préhension 20.

On décrira à présent plus en détail en se référant à la figure 7 une forme de réalisation préférentielle du module de prélèvement 24 de la figure 1.

Ce module de prélèvement 24 comprend un fourreau support 130, d'axe vertical, qui traverse la paroi supérieure horizontale 10 de la boîte d'analyse et comporte une bride 132 par lequel il est fixé sur la peau métallique 12 doublant intérieurement cette paroi.

Le fourreau 130 supporte un arbre vertical 134 susceptible d'être animé d'un mouvement de rotation autour de son axe et d'un mouvement de translation selon cet axe. Des joints d'étanchéité sont prévus afin de préserver le confinement de la boîte d'analyse. A son extrémité basse, située dans la boîte d'analyse, l'arbre 134 supporte un bras horizontal 136 qui porte un embout d'aspiration 138, en forme d'aiguille verticale, à son extrémité.

A son extrémité haute, située hors de la boîte d'analyse, le fourreau support 130 est solidaire d'une plaque horizontale inférieure 140. Cette plaque est reliée par des colonnettes verticales 142 à une plaque supérieure horizontale 144. La plaque supérieure horizontale 144 supporte un vérin 146 dont la tige de commande 148 fait saillie verticalement vers le bas.

A son extrémité inférieure, la tige de commande 148 du vérin 146 est fixée sur un chariot 150 apte à coulisser verticalement le long des colonnettes 142. L'extrémité haute de l'arbre 134 est supportée de façon rotative dans le chariot 150 tout en étant solidaire de ce dernier en translation.

Le chariot 150 supporte un motoréducteur 152 dont l'arbre de sortie vertical porte un pignon 154 qui s'engrène sur un pignon 156 solidaire de l'arbre 134.

L'agencement qui vient d'être décrit en se référant à la figure 7 permet de commander la montée et la descente de l'embout d'aspiration 138 en actionnant le vérin 146 ainsi que la rotation de cet embout d'aspiration autour de l'axe vertical de l'arbre 134, en actionnant le motoréducteur 152.

Le chariot 150 supporte également un vérin de verrouillage 158 apte à déplacer une tige de verrouillage verticale 160 entre une position haute et une position basse. Dans sa position basse, la tige de verrouillage 160 pénètre dans une empreinte (non représentée) formée dans un disque horizontal 162 solidaire de l'arbre 134. Plus précisément, le disque 162 comporte deux empreintes correspondant à deux positions angulaires différentes de l'embout d'aspiration 138, dans lesquelles ce dernier occupe soit une position de prélèvement pour laquelle son axe vertical est confondu avec l'axe de la pince de serrage 76 du module 22 d'ouverture et de fermeture des cruchons, soit une ou plusieurs positions de distribution du liquide prélevé, dans lesquelles l'embout d'aspiration 138 se trouve à la verticale d'un récipient tel que le récipient 26 de la figure 1.

Lorsque la tige de verrouillage 160 occupe sa position haute, elle est dégagée des empreintes formées dans le disque 162.

Comme l'illustre égalemen t la figure 7, l'extrémité haute de l'embout d'aspiration 138 débouche dans un tube souple 164 qui passe par une garde hydraulique de sécurité 166 avant de traverser la paroi supérieure horizontale 10 de la boîte d'analyse pour être reliée à la pompe ou piston d'aspiration (non représentée) située à l'extérieur de cette boîte. La garde hydraulique de sécurité 166 peut être soit montée directement sur le bras horizontal 136, comme l'illustre la figure 7, soit sur la partie du fourreau support 130 située en dessous de la peau métallique 12.

La mise en oeuvre de l'ensemble de prélèvement d'échantillons liquides conforme à l'invention va à présent être décrite brièvement.

Le cruchon 14 contenant l'échantillon à analyser chute dans la goulotte 62 soit depuis le dispositif de stockage 18, soit directement depuis l'extérieur de la boîte d'analyse. La pince de préhension 38 du module de préhension 20 est alors ouverte et le fond escamotable 44 est placé à la verticale de cette pince. Par conséquent, la chute du cruchon 14 est stoppée par le fond 44. Le vérin 42 est alors actionné afin que le cruchon 14 soit saisi par la pince de préhension 38.

Le motoréducteur 60 servant à commander le déplacement angulaire de la pince de préhension 38 autour de l'axe vertical de l'arbre 34 est alors actionné, de façon à amener le cruchon 14 à la vertical du module 22 d'ouverture et de fermeture. A cet instant, il est à noter que l'embout d'aspiration 138 du module de prélèvement 24 occupe sa position de distribution, c'est-à-dire qu'il est décalé angulairement par rapport au module 22 d'ouverture et de fermeture des cruchons. Par ailleurs, ce dernier module occupe sa position d'attente dans laquelle la pince de serrage 76 est en position haute.

Lorsque l'axe du cruchon 14 est aligné avec celui du module 22 d'ouverture et de fermeture des cruchons, le vérin 86 est actionné de façon à commander la descente de la pince de serrage 76. A la fin de cette descente, le plateau ramasse-goutte 114 s'escamote automatiquement dans la position illustrée sur la figure 5, de sorte que l'embout tubulaire 106 vient coiffer le haut du cruchon 14 tenu dans la pince de préhension 38. Cela est rendu possible par le fait que la pince de serrage 76 est alors ouverte, c'est-à-dire que la noix 112 occupe sa position basse à l'intérieur de l'embout tubulaire 106.

Dès que la descente de la pince de serrage 76 est terminée, le motoréducteur 100 est actionné dans le sens du serrage de la pince 76, dont les becs 108 viennent alors en prise sur le bouchon 16 du cruchon 14 qui reste lui-même serré dans la pince de préhension 38.

Le débouchage du cruchon 14 est alors effectué en commandant la rotation de la broche creuse 74 et de la pince de serrage 76 montée dans le bas de cette broche, dans le sens du dévissage du bouchon 16. Ce dévissage s'accompagne d'une remontée de la tige 104 par rapport à la broche creuse 74 sur une distance autorisée par le jeu vertical qui existe entre la tige 104 et la broche creuse 74.

Lorsque le dévissage du bouchon 16 est terminé, le vérin 86 est à nouveau actionné dans le sens de la remontée de la pince de serrage 76. Au cours de cette remontée, l'extrémité de la vis à téton 124 parcourt la rainure 126 formée sur la tige 116, ce qui a pour effet d'amener le plateau ramasse-goutte 114 en dessous de la pince de serrage 76 portant le bouchon 16 dès le début de la remontée de cette pince. La chute accidentelle d'une goutte de produit est ainsi évitée.

Lorsque la pince de serrage 76 portant le bouchon 15 arrive en position haute, il existe entre cette pince et le cruchon 14, toujours tenu par la pince de préhension 38, une distance suffisante pour permettre l'amenée de l'embout d'aspiration 138 entre ces deux pièces. Le motoréducteur 152 du module de prélèvement 24 est donc actionné afin d'amener l'embout d'aspiration 138 dans l'alignement vertical du module 22 d'ouverture et de fermeture des cruchons, dans lequel se trouve déjà le cruchon 14 tenu par la pince de préhension 38. Cette amenée en alignement de l'embout d'aspiration 138 se fait lorsque cet embout a été amené en position haute par le vérin 146.

Dès que l'embout d'aspiration 138 se trouve à la verticale du cruchon 14, le vérin 146 est actionné afin de faire descendre l'embout d'aspiration dans le cruchon 14 tenu par la pince de préhension 38. L'aspiration d'une quantité déterminée de liquide à l'intérieur du cruchon est alors effectuée, d'une manière contrôlée, par la pompe d'aspiration (non représentée) située à l'extérieur de la boîte d'analyse.

Une fois le prélèvement effectué, le vérin 146 est actionné en sens inverse afin de sortir l'embout d'aspiration 138 du cruchon 14, puis le motoréducteur 152 est actionné de façon à amener l'embout d'aspiration 138 dans sa position de distribution du liquide prélevé, à la verticale du réceptacle 26 sur la figure 1. Le liquide prélevé dans le cruchon 14 peut ainsi être introduit dans un ou plusieurs réceptacles prévus à cet effet, afin d'y subir les analyses souhaitées.

Dès que l'embout d'aspiration 138 n'est plus dans l'alignement du module 22 d'ouverture et de fermeture des cruchons, le vérin 86 peut à nouveau être actionné de façon à faire redescendre la pince de serrage 76 portant le bouchon 16 et à amener ce dernier en contact avec le filetage prévu pour recevoir ce bouchon sur le cruchon 14. On commande une rotation de la broche 74 dans le sens du vissage, afin de revisser le bouchon 16 sur le cruchon 14. Il est rappelé que le plateau ramasse-goutte 14 s'escamote automatiquement lorsque la pince de serrage 76 portant le bouchon 16 arrive à proximité immédiate du cruchon 14.

Lorsque le bouchon a été revissé, la pince de serrage 76 est libérée par un actionnement du motoréducteur 100 et une nouvelle mise en oeuvre du vérin 86 permet de faire remonter la pince de serrage 76 pour dégager le cruchon 14 alors rebouché.

Le motoréducteur 60 peut alors être actionné afin d'amener le cruchon rebouché au droit du poste d'évacuation matérialisé par la goulotte inférieure 64 sur la figure 2. Le fond 44 est alors escamoté et la pince 38 ouverte par un actionnement des vérins 42 et 48.

Les motoréducteurs et vérins des trois modules 20, 22 et 24 sont gérés par un automate (non représenté).

La description qui précède montre que l'ensemble de prélèvement d'échantillons liquides selon l'invention permet de supprimer tous déchets liquides et solides inutiles et d'assurer une gestion particulièrement précise et efficace des échantillons. De plus, l'automatisation des différentes opérations permet de supprimer tout risque d'erreur ainsi que de nombreuses opérations fastidieuses pour les opérateurs. En outre, tout risque d'accident d'irradiation pour ces derniers est également supprimé.

## Revendications

1. Ensemble de prélèvement d'échantillons liquides dans des cruchons (14) obturés par des bouchons vissés (16), caractérisé par le fait qu'il comprend :
- un module de préhension (20) des cruchons, comportant une pince de préhension (38), apte à tenir un cruchon selon un axe sensiblement vertical, des moyens de commande d'ouverture et de fermeture (42) de la pince et des moyens de commande d'un déplacement horizontal (60) de la pince entre un poste de préhension et un poste d'ouverture des cruchons ;
- un module (22) d'ouverture et de fermeture des cruchons, placé au droit du poste d'ouverture des cruchons, comportant une pince de serrage (76) d'axe vertical, des moyens (100) de commande de serrage et de desserrage de la pince de serrage, des moyens de commande de rotation de la pince de serrage autour de son axe vertical, et des moyens (86) de commande d'un déplacement vertical de la pince de serrage ; et
- un module de prélèvement (24) de liquide comprenant un embout d'aspiration (138), d'axe sensiblement vertical, des moyens de commande d'un déplacement horizontal (152) de cet embout entre une position de prélèvement, dans laquelle les axes verticaux de la pince de serrage et de l'embout d'aspiration sont confondus, et une position de distribution du liquide prélevé dans un réceptacle, et des moyens (146) de commande d'un déplacement vertical de l'embout d'aspiration.

2. Ensemble selon la revendication 1, caractérisé par le fait que la pince de préhension (38) est montée à l'extrémité basse d'un arbre rotatif (34), d'axe vertical, décalé par rapport à l'axe du cruchon tenu par cette pince de préhension et les moyens de commande d'un déplacement horizontal de la pince de préhension comprenant des moyens (60) pour commander une rotation dudit arbre rotatif (34).

3. Ensemble selon l'une quelconque des revendications précédentes, caractérisé par le fait que le module de préhension (20) comprend de plus un fond escamotable (44), apte à être placé sous la pince de préhension (38).

4. Ensemble selon l'une quelconque des revendications précédentes, caractérisé par le fait que le module de préhension (20) comprend des moyens de verrouillage (66,68,70) en position de la pince de préhension (38) en face du poste de préhension et du poste d'ouverture des cruchons.

5. Ensemble selon l'une quelconque des revendications précédentes, caractérisé par le fait que le module (22) d'ouverture et de fermeture comprend une broche (74), d'axe vertical, reliant la pince de serrage (76) aux moyens de commande de rotation, et une tige disposée coaxialement à l'intérieur de la broche et reliant la pince de serrage (76) aux moyens de commande de serrage et de desserrage.

6. Ensemble selon l'une quelconque des revendications précédentes, caractérisé par le fait que le module (22) d'ouverture et de fermeture comprend de plus un plateau ramasse-goutte escamotable (114), apte à être placé en dessous de la pince de serrage (76).

7. Ensemble selon la revendication 6, caractérisé par le fait que les moyens de commande d'un déplacement vertical de la pince de serrage (76) agissent simultanément sur le plateau ramasse-goutte (114), de telle sorte que celui-ci soit placé en dessous de la pince de serrage (76) lorsque cette dernière n'occupe pas une position basse de vissage et de dévissage.

8. Ensemble selon l'une quelconque des revendications précédentes, caractérisé par le fait que l'embout d'aspiration (138) est monté sur un bras horizontal (136), dont une rotation par rapport à un axe vertical décalé par rapport à l'embout est commandée par les moyens de commande (152) d'un déplacement horizontal de l'embout.

9. Ensemble selon l'une quelconque des revendications précédentes, caractérisé par le fait que l'embout d'aspiration (138) est relié à une garde hydraulique de sécurité (166).

10. Ensemble selon l'une quelconque des revendications précédentes, caractérisé par le fait que le poste de préhension des cruchons comprend une goulotte supérieure (62) d'arrivée des cruchons et une goulotte inférieure (64) d'évacuation des cruchons, disposées l'une au-dessus de l'autre, selon un axe vertical, et entre lesquelles peut venir se placer la pince de préhension (38).

## Patentansprüche

1. Anordnung zur Entnahme von Flüssigkeitsproben aus mit Schraubverschlüssen (16) geschlossenen Behältern (14), **dadurch gekennzeichnet, daß** sie aufweist:
- ein Modul (20) zum Greifen von Behältern, welches eine Greifzange (38) aufweist, die ausgebildet ist, um einen Behälter gemäß einer im wesentlichen vertikalen Achse aufzunehmen, Steuereinrichtungen (42) zum Öffnen und Schließen der Zange und Steuereinrichtungen (60) für das horizontale Verschieben der Zange zwischen einer Greifposition und einer Position zum Öffnen der Behälter;
- ein Modul (22) zum Öffnen und Schließen von Behältern, welches rechts von der Position zum Öffnen der Behälter angeordnet ist und eine Spannzange (76) der vertikalen Achse, Steuereinrichtungen (100) zum Spannen und Entspannen der Spannzange, Steuereinrichtungen für das Drehen der Spannzange um ihre vertikale Achse und Steuereinrichtungen (86) für ein vertikales Verschieben der Spannzange aufweist; und
- ein Modul (24) zum Entnehmen von Flüssigkeit, welches einen Ansaugansatz (138) mit im wesentlichen vertikaler Achse, Steuereinrichtungen (152) für ein horizontales Verschieben des Ansatzes zwischen einer Entnahmestellung, in der die vertikalen Achsen der Spannzange und des Ansaugansatzes zusammenfallen, und einer Stellung zur Abgabe des entnommenen Flüssigkeit in ein Gefäß und Steuereinrichtungen (146) für ein vertikales Verschieben des Ansaugansatzes aufweist.

2. Anordnung nach Anspruch 1, **dadurch gekennzeichnet**, **daß** die Greifzange (38) am unteren Ende einer Drehspindel (34) mit vertikaler Achse, die bezüglich der Achse des mittels der Greifzange ergriffenen Behälters versetzt ist, angebracht ist und daß die Steuereinrichtungen für das horizontale Verschieben der Greifzange Einrichtungen (60) zum Bewirken einer Drehung der Drehspindel (34) aufweisen.

3. Anordnung nach einem der vorhergehenden Ansprüche, **dadurch gekennzeichnet**, **daß** das Greifmodul (20) weiterhin einen hochklappbaren Boden (44) aufweist, der unter der Greifzange (38) angeordnet werden kann.

4. Anordnung nach einem der vorhergehenden Ansprüche, **dadurch gekennzeichnet, daß** das Greifmodul (20) Einrichtungen (66, 68, 70) zum Blockieren der Greifzange (38) in einer Stellung vor dem Greifposition und der Position zum Öffnen der Behälter aufweist.

5. Anordnung nach einem der vorhergehenden Ansprüche, **dadurch gekennzeichnet, daß** das Modul (22) zum Öffnen und Schließen eine Welle (74) mit vertikaler Achse, welche die Spannzange (76) mit der Steuereinrichtung für die Drehung verbindet, und eine im Innern der Welle koaxial angeordnete und die Spannzange (76) mit der Steureinrichtung zum Spannen und Entspannen verbindende Stange aufweist.

6. Anordnung nach einem der vorhergehenden Ansprüche, **dadurch gekennzeichnet, daß** das Modul (22) zum Öffnen und Schließen weiterhin eine hochklappbare Tropfenauffangplatte (114) aufweist, die unter der Spannzange (76) angeordnet werden kann.

7. Anordnung nach Anspruch 6, **dadurch gekennzeichnet, daß** die Steuereinrichtungen für das vertikale Verschieben der Spannzange (76) gleichzeitig auf die Tropfenauffangplatte (114) wirken, so daß diese unter der Spannzange (76) angeordnet ist, wenn diese letzere nicht eine untere Ver- oder Entschraubungsstellung einnimmt.

8. Anordnung nach einem der vorhergehenden Ansprüche, **dadurch gekennzeichnet, daß** der Ansaugansatz (138) auf einem waagerechten Arm (136) angeordnet ist, bei dem eine Drehung bezüglich einer bezüglich des Ansatzes verschobenen vertikalen Achse von der Steuereinrichtung (152) für ein horizontales Verschieben des Ansatzes gesteuert wird.

9. Anordnung nach einem der vorhergehenden Ansprüche, **dadurch gekennzeichnet, daß** der Ansaugansatz (138) mit einer hydraulischen Sicherheitsvorrichtung (166) verbunden ist.

10. Anordung nach einem der vorhergehenden Ansprüche, **dadurch gekennzeichnet, daß** der Stand zum Greifen von Behältern eine obere Übergabevorrichtung (62) zum Empfang der Behälter und eine untere Übergabevorrichtung (64) zum Abgeben der Behälter aufweist, wobei die eine in einer vertikalen Achse über der anderen angeordnet ist und zwischen ihnen die Greifzange (38) Platz findet.

## Claims

1. Assembly for taking liquid samples from jugs (14) sealed by screw caps (16), characterized in that it comprises:
- a module (20) for gripping the jugs having a gripper (38) able to hold a jug in accordance with a substantially vertical axis, gripper opening and closing control means and control means (42) for a horizontal displacement (60) of the gripper between a gripping station and an opening station for the jugs;
- a module (22) for opening and closing the jugs positioned to the right of the jug opening station, which has vertically axed nippers (76), means (100) for the control of the tightening and loosening of the nippers, means for the control of the rotation of the nippers about the vertical axis thereof and means (86) for the control of a vertical displacement of the nippers; and
- a module (24) for sampling liquid incorporating a suction endpiece (138), which is substantially vertically axed, means (152) for the control of the horizontal displacement of said endpiece between a sampling position, in which the vertical axes of the nippers and the suction endpiece coincide, and a position for the distribution of the liquid sampled in a receptacle, and means (146) for the control of the vertical displacement of the suction endpiece.

2. Assembly according to claim 1, characterized in that the gripper (38) is mounted at the lower end of a vertically axed, rotary shaft (34), displaced with respect to the axis of the jug held by said gripper and the control means of a horizontal displacement of the gripper incorporate means (60) for controlling a rotation of said rotary shaft (34).

3. Assembly according to any one of the preceding claims, characterized in that the gripping module (20) also comprises a retractable base (44), which can be placed below the gripper (38).

4. Assembly according to any one of the preceding claims, characterized in that the gripping module (20) comprises means (66, 68, 70) for locking the gripper (38) in position in front of the gripping station and the opening station for the jugs.

5. Assembly according to any one of the preceding claims, characterized in that the opening and closing module (22) comprises a vertically axed pin (74) connecting the nippers (76) to the rotation control means, and a rod positioned coaxially within the pin and connecting the nippers (76) to the tightening and loosening control means.

6. Assembly according to any one of the preceding claims, characterized in that the opening and closing module (22) also comprises a retractable drop collecting plate (114), which can be placed below the nippers (76).

7. Assembly according to claim 6, characterized in that the means for controlling a vertical displacement of the nippers (76) acts simultaneously on the drop collecting plate (114), so that the latter is placed below the nippers (76) when the latter does not occupy a lower screwing and unscrewing position.

8. Assembly according to any one of the preceding claims, characterized in that the suction endpiece (138) is mounted on a horizontal arm (136), whereof a rotation with respect to a vertical axis displaced relative to the endpiece is controlled by the means (152) for controlling a horizontal displacement of the endpiece.

9. Assembly according to any one of the preceding claims, characterized in that the suction endpiece (138) is connected to a hydraulic safety guard (166).

10. Assembly according to any one of the preceding claims, characterized in that the jug gripping station comprises an upper jug supply chute (62) and a lower jug discharge chute (64), which are superimposed in accordance with a vertical axis and between which can be placed the gripper (38).
